# EUROPEAN PATENT APPLICATION

(11) **EP 3 046 367 A1**
(43) Date of publication of application: **20.07.2016**
(21) Application number: 13893438.5
(22) Date of filing: 13.09.2013
(51) Int. Cl.: H04W 36/00

(54) **METHOD, DEVICE, AND SYSTEM FOR CARRIER CONVERSION**

(71) Applicant: Fujitsu Limited, Kawasaki-shi, Kanagawa 211-8588 (JP)
(72) Inventor: ZHANG, Lei, Beijing 100025 (CN); WANG, Yi, Beijing 100025 (CN); ZHOU, Hua, Beijing 100025 (CN)
(74) Representative: Cooper-Rolfe, Elizabeth Louise
(86) International application number: PCT/CN2013/083473
(87) International publication number: WO 2015/035608

(57) **Abstract**

Embodiments of the present disclosure provide a method and apparatus for transforming carrier and a system. In one embodiment, the method includes: transmitting a carrier transformation indication message by a base station of a cell to UE served by the cell, and indicating the UE via the carrier transformation indication message that a carrier type of the cell is to be changed; and transforming the carrier type, and modifying a content and/or a transmission mode of corresponding system information and a sequence and/or a transmission mode of a common signal, by the base station. With the method for transforming carrier, advantages of the BCT and NCT may be better used, and stable transition of serving the UE by the carriers may be achieved.

## Description

### Field

The present disclosure relates to the field of communications, and in particular to a method and apparatus for transforming carrier and a system.

### Background

In recent years, the demand- for mobile data traffics has been increased rapidly. It is expected that the demand for data traffics in the year of 2020 will be 1000 times of those in the year of 2010. How to evolve the existing mobile communication networks and develop new technologies to support so rapidly increased traffics have become one of the concerns in the field of mobile communications.

In multiple possible solutions, one solution is to use small cells to increase physical resource utilization. Furthermore, on a premise of identical covering areas, replacing one macro cell with multiple small cells may also efficiently save power overhead. A small cell is a green technology saving more energies. And at the same time, a small cell facilitates flexible deployment, and may be flexibly opened and closed depending on an amount of users and an amount of traffic data.

In order to reduce unnecessary cell-specific signal overhead (for example, cell-specific signals are transmitted at full power on the whole bandwidth, even though there are no downlink user data transmitted), in the discussion of Release 12 of the LTE (long-term evolution) specification, a new carrier type (NCT) is taken into account. Relative to the NCT, a legacy carrier is referred to as a BCT (backwards compatibility carrier type). In comparison with the BCT, the NCT may also be able to efficiently reduce inter-cell interference resulted from unnecessary cell-specific signals. Hence, the NCT is more suitable in dense deployment scenarios. For example, use of the NCT in densely deployed small cells may efficiently increase an SINR (signal-to-interference plus noise ratio) of user equipment in receiving signals, thereby further increasing capacities of the cells. However, as the NCT has no backwards compatibility, user equipment (UE, also referred to as terminal equipment or a terminal) in releases prior to LTE Release 12 is unable to access into NCT carriers.

It should be noted that the above description of the background is merely provided for clear and complete explanation of the present disclosure and for easy understanding by those skilled in the art. And it should not be understood that the above technical solution is known to those skilled in the art as it is described in the background of the present disclosure.

### Summary

An object of embodiments of the present disclosure is to provide a method and apparatus for transforming carrier and a system, so that advantages of the BCT and NCT are better used, and stable transition of serving the UE by the carriers may be achieved.

According to a first aspect of the embodiments of the present disclosure, there is provided a method for transforming carrier, including:
transmitting a carrier transformation indication message by a base station of a cell to UE served by the cell, and indicating the UE via the carrier transformation indication message that a carrier type of the cell is to be changed; and
transforming the carrier type, and modifying a content and/or a transmission mode of corresponding system information and a sequence and/or a transmission mode of a common signal, by the base station.

According to a second aspect of the embodiments of the present disclosure, there is provided a method for transforming carrier, including:
determining a carrier transformation time point by UE after receiving a carrier transformation indication message transmitted by a base station, according to a predefined rules or time indication information carried in the carrier transformation indication message; and
performing operations related to carrier transformation by the UE at a determined carrier transformation time point.

According to a third aspect of the embodiments of the present disclosure, there is provided a method for transforming carrier, including:
handing over all UEs served by a cell over to carriers capable of providing services to the UEs by a base station of the cell; and
transforming a carrier type, and modifying a content and/or a transmission mode of corresponding system information and a sequence and/or a transmission mode of a common signal, by the base station.

According to a fourth aspect of the embodiments of the present disclosure, there is provided a method for transforming carrier, including:
terminating scheduling UE in part of subframes of current carrier by a base station;
transforming a carrier type of the part of subframes, and modifying a content and/or a transmission mode of corresponding system information and a sequence and/or a transmission mode of a common signal, by the base station;
handing over UEs served by current carrier and are able to support the transformed carrier type to the transformed carrier; and
transforming a carrier type of other subframes than the part of subframes of the current carrier by the base station into the transformed carrier.

According to a fifth aspect of the embodiments of the present disclosure, there is provided a method for transforming carrier, including:
transmitting a handover command and handover assistant information by a base station to UE, so that the UE performs operations related to a carrier type designated by the base station according to the handover assistant information.

According to a sixth aspect of the embodiments of the present disclosure, there is provided a method for transforming carrier, including:
receiving by UE a handover command and handover assistant information transmitted by a base station; and
performing operations related to a carrier type designated by the base station by the UE according to the handover assistant information.

According to a seven aspect of the embodiments of the present disclosure, there is provided a base station, including:
a transmitting unit configured to transmit a carrier transformation indication message to UE served by a cell corresponding to the base station, and indicate the UE via the carrier transformation indication message that a carrier type of the cell is to be changed; and
a processing unit configured to transform a carrier type, and modify a content and/or a transmission mode of corresponding system information and a sequence and/or a transmission mode of a common signal.

According to an eighth aspect of the embodiments of the present disclosure, there is provided UE, including:
a determining unit configured to determine a carrier transformation time point after receiving a carrier transformation indication message transmitted by a base station, according to a predefined rules or time indication information carried in the carrier transformation indication message; and
a handover unit configured to perform operations related to carrier transformation at a carrier transformation time point determined by the determining unit.

According to a ninth aspect of the embodiments of the present disclosure, there is provided a base station, including:
a handover unit configured to hand over all UEs which are served by a cell corresponding to the base station to carriers capable of providing services to the UEs; and
a processing unit configured to transform a carrier type, and modify a content and/or a transmission mode of corresponding system information and a sequence and/or a transmission mode of a common signal.

According to a tenth aspect of the embodiments of the present disclosure, there is provided a base station, including:
a first scheduling unit configured to terminate scheduling UE in part of subframes of current carrier;
a first processing unit configured to transform a carrier type of the part of subframes, and modify a content and/or a transmission mode of corresponding system information and a sequence and/or a transmission mode of a common signal;
a first handover unit configured to hand over UEs served by current carrier and are able to support to a transformed carrier type to the transformed carrier; and
a second processing unit configured to transform a carrier type of other subframes than the part of subframes of the current carrier into the transformed carrier.

According to an eleventh aspect of the embodiments of the present disclosure, there is provided a base station, including:
a transmitting unit configured to transmit a handover command and handover assistant information to UE, so that the UE performs operations related to a carrier type designated by the base station according to the handover assistant information.

According to a twelfth aspect of the embodiments of the present disclosure, there is provided UE, including:
a receiving unit configured to receive a handover command and handover assistant information transmitted by a base station; and
a transforming unit configured to perform operations related to a carrier type designated by the base station according to the handover assistant information.

According to another aspect of the embodiments of the present disclosure, there is provided a communication system, including the base station as described in the seventh aspect and the UE as described in the eighth aspect, or including the base station as described in the ninth aspect and UE, or including the base station as described in the tenth aspect and UE, or including the base station as described in the eleventh aspect and the UE as described in the twelfth aspect.

According to a further aspect of the embodiments of the present disclosure, there is provided a computer-readable program, wherein when the program is executed in a base station, the program enables a computer to carry out the method for transforming carrier as described in any one of the first, the third, the fourth, the fifth, and the sixth aspects in the base station.

According to still another aspect of the embodiments of the present disclosure, there is provided a storage medium in which a computer-readable program is stored, wherein the computer-readable program enables a computer to carry out the method for transforming carrier as described in any one of the first, the third, the fourth, the fifth, and the sixth aspects in a base station.

According to still another aspect of the embodiments of the present disclosure, there is provided a computer-readable program, wherein when the program is executed in terminal equipment, the program enables a computer to carry out the method for transforming carrier as described in the second or the seventh aspect in the terminal equipment.

According to still another aspect of the embodiments of the present disclosure, there is provided a storage medium in which a computer-readable program is stored, wherein the computer-readable program enables a computer to carry out the method for transforming carrier as described in the second or the seventh aspect in terminal equipment.

An advantage of the embodiments of the present disclosure exists in that with the method and apparatus for transforming carrier and the system, advantages of the BCT and NCT may be better used, and stable transition of serving the UE by the carriers may be achieved.

With reference to the following description and drawings, the particular embodiments of the present disclosure are disclosed in detail, and the principles of the present disclosure and the manners of use are indicated. It should be understood that the scope of the embodiments of the present disclosure is not limited thereto. The embodiments of the present disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises, comprising/includes/including" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated in size, e.g., made larger in relation to other parts than in an exemplary device actually made according to the disclosure. Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments. In the drawings:
FIG 1 is a flowchart of the method for transforming carrier of Embodiment 1 of the present disclosure;
FIG 2 is a flowchart of processing at a UE side corresponding to the method of FIG 1;
FIG 3 is a flowchart of the method for transforming carrier of Embodiment 3 of the present disclosure;
FIG 4 is a flowchart of processing of transition carrier corresponding to the method of FIG 3;
FIG 5 is a flowchart of processing at a UE side corresponding to the method of FIG 4;
FIG 6 is a flowchart of the method for transforming carrier of Embodiment 6 of the present disclosure;
FIG 7 is a flowchart of the method for transforming carrier of Embodiment 7 of the present disclosure;
FIG 8 is a flowchart of processing at a UE side corresponding to the method of FIG 7;
FIG 9 is a schematic diagram of a structure of a base station corresponding to the method of FIG 1;
FIG 10 is a schematic diagram of a structure of UE corresponding to the method of FIG 2;
FIG 11 is a schematic diagram of a structure of a base station corresponding to the method of FIG 3;
FIG 12 is a schematic diagram of a structure of a base station corresponding to the method of FIG. 4;
FIG 13 is a schematic diagram of a structure of UE corresponding to the method of FIG 5;
FIG 14 is a schematic diagram of a structure of a base station corresponding to the method of FIG 6;
FIG 15 is a schematic diagram of a structure of a base station corresponding to the method of FIG 7; and
FIG 16 is a schematic diagram of a structure of UE corresponding to the method of FIG 8.

### Detailed Description

These and further aspects and features of embodiments of the present disclosure will be apparent with reference to the following description and attached drawings. These embodiments are illustrative only, and are not intended to limit the present disclosure.

It was found by the inventors in the implementation of the present disclosure that a better effect may be produced by combining flexible deployment of small cells and the BCT and the NCT carriers. For example, many small cells are densely deployed in a commercial district. In the morning (not rush hours), there are only a few users in this district, and only a few small cells are activated to serve for the users. In this case, as the number of the small cells in the activated state is relatively small, an inter-cell interference level is relatively low. In order to serve for more users, including users of new releases and legacy users, BCT carriers are used by the small cells. As the change of time, the number of the users in the area is more and more; and as the increase of the number of the activated small cells, an inter-cell interference level in the area also increases. And when the interference level increases to a certain extent, the small cells may transform from the BCT carriers to the NCT carriers, so as to lower the inter-cell interference level and server for the users better. As the gradual increase of the number of users, all the small cells may transform to the NCT carriers at last. The number of the users will lower after reaching a peak along with the time, the number of the small cells in the activated state will become less and less, and the inter-cell interference in the area will also become less and less. After the interference level is lowered to a certain extent, the small cells in the activated state may transform the carriers to the BCT carriers, so as to serve for more users.

How to transform from the BCT to the NCT or from the NCT to the BCT or from the BCT to hybrid carriers or from the NCT to the hybrid carriers is a key point of study of the present disclosure.

To make embodiments of the present disclosure to be more clear and easy to be understood, several concepts concerned in the embodiments of the present disclosure shall be explained below first.

In the embodiments of the present disclosure, user equipment of the following four types are concerned:
first type: users supporting the BCT, not supporting the NCT and not supporting RRM (radio resource management) measurement performed based on a subframe pattern, such as users in LTE Rel. 8 and Rel. 9;
second type: users supporting the BCT, not supporting the NCT and supporting the RRM measurement performed based on a subframe pattern, such as users in LTE Rel. 10 and Rel. 11;
third type: users supporting the BCT, supporting the NCT and supporting the RRM measurement performed based on a subframe pattern; and
fourth type: users not supporting the BCT, only supporting the NCT and supporting the RRM measurement performed based on a subframe pattern.

In the embodiments of the present disclosure, carriers of the following four types are concerned:
first type: backwards compatibility carrier type (BCT);
second type: new carrier type (NCT);
third type: first type of hybrid carriers, a part of subframes of which carrying BCT carriers, and the other part subframes carrying NCT carriers, operational bands of the BCT carriers and the NCT carriers carried by them overlapping each other, and the cell IDs of the BCT carriers and the NCT carriers being identical; and
fourth type: second type of hybrid carriers, a part of subframes of which carrying BCT carriers, and the other part subframes carrying NCT carriers, operational bands of the BCT carriers and the NCT carriers carried by them overlapping each other, and the cell IDs of the BCT carriers and that of the NCT carriers being different.

In this embodiment, for the hybrid carriers, the subframes carrying the BCT carriers (abbreviated to as BCT subframes) contain broadcast information applicable to the BCT and common signals, such as common reference signals, and the subframes carrying the NCT carriers (abbreviated to as NCT subframes) contain broadcast information applicable to the NCT and common signals.

Here, for the first type of hybrid carriers (i.e. the above-described third type of carriers), different secondary signals (such as a PSS/SSS and a cell-specific pilot signal) may also be carried by the BCT subframes and the NCT subframes, such that user equipment may search them according to respective secondary signals of the BCT subframes and the NCT subframes.

For example, for the first type of hybrid carriers, the broadcast information in the BCT subframes may indicate that this is a carrier of a hybrid type, the BCT and the NCT have identical cell ID and particular values of the cell ID, and may further carry a subframe pattern where the BCT operates, such as indicating in a form of a bitmap. In this embodiment, the information carried by the BCT subframes is placed in locations which are not read by legacy users (such the above-described first type of users and second type of users), that is, the information may only serve for users that are capable of identifying the carriers as hybrid carriers, and the information has no effect on use of the legacy users in the BCT carriers. For the first type of hybrid carriers, the broadcast information in the NCT subframes may indicate that this is a carrier of a hybrid type, the BCT and the NCT have identical cell ID and particular values of the cell ID, and may further carry a subframe pattern where the NCT operates, such as indicating in a form of a bitmap. Similarly, placement of the information in the NCT subframes should not affect use of the fourth type of users in the NCT carriers.

Here, for the second type of hybrid carriers (i.e. the above-described fourth type of carriers), different secondary signals (such as a PSS/SSS and a cell-specific pilot signal) may also be carried by BCT subframes and NCT subframes, such that the user equipment may search them according to respective secondary signals of the BCT subframes and the NCT subframes.

For another example, for the second type of hybrid carriers, the broadcast information in the BCT subframes may indicate that this is a BCT carrier of which not all subframes operate, cell ID of the BCT carrier, and may further carry a subframe pattern where the BCT operates, such as indicating in a form of a bitmap. In this embodiment, the information carried by the BCT subframes is also placed in locations which are not read by legacy users (such the above-described first type of users and second type of users), that is, the information may only serve for users that are capable of identifying the carriers as hybrid carriers, and the information has no effect on use of the legacy users in the BCT carriers. For the second type of hybrid carriers, the broadcast information in the NCT subframes may indicate that this is a NCT carrier of which not all subframes operate, cell ID of the NCT carriers, and may further carry a subframe pattern where the NCT operates, such as indicating in a form of a bitmap. Similarly, placement of the information in the NCT subframes should not affect use of the fourth type of users in the NCT carriers.

In this embodiment, the hybrid carrier containing two types of carriers is taken as an example. However, this embodiment is not limited thereto, and the method of this embodiment is also applicable to cases where the hybrid carriers contain more than two types of carriers.

The method and apparatus of the present disclosure shall be described below with reference to the accompanying drawings and particular embodiments.

### Embodiment 1

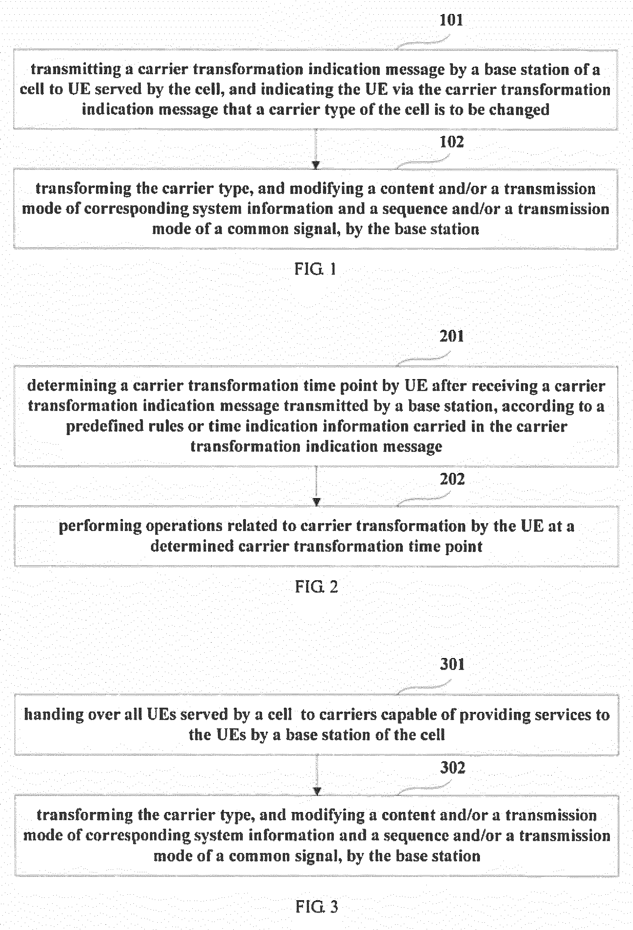

An embodiment of the present disclosure provides a method for transforming carrier. FIG 1 is a flowchart of the method. Referring to FIG. 1, the method includes:
step 101: transmitting a carrier transformation indication message by a base station of a cell to UE served by the cell, and indicating the UE via the carrier transformation indication message that a carrier type of the cell is to be changed; and
step 102: transforming the carrier type, and modifying a content and/or a transmission mode of corresponding system information and a sequence and/or a transmission mode of a common signal, by the base station.

In step 101, the carrier transformation indication message may be carried by RRC signaling; however, this embodiment is not limited thereto. The base station may notify users in the cell via the RRC signaling that the carrier type of the cell is to be changed; for example, the carrier of the cell is to be transformed from a carrier type A into a carrier type B. In addition, the RRC signaling may further carry some other corresponding information, for the users to identify and process.

In step 101, if cell ID of a current carrier and that of the transformed carrier are different, the carrier transformation indication message may further carry new ID of the cell, i.e. the cell ID of the transformed carrier. In this case, the base station and the user may agree a carrier transformation time in advance; that is, when the cell will change the cell ID and perform corresponding variation, for example, at a first subframe of a next frame after the UE receiving the carrier transformation indication message, thus the user may perform corresponding operations related to carrier transformation at a corresponding time point according to the agreed carrier transformation time. In another implementation, the above carrier transformation time, that is, when the carrying cell will change the cell ID and perform corresponding variation, such as delaying by several subframes, may be carried by the carrier transformation indication message. Hence, the user may perform corresponding operations related to carrier transformation at the corresponding time point according to the carrier transformation time. For example, after receiving the carrier transformation indication message, the user will perform corresponding operations related to carrier transformation, such as identifying system information of the cell, receiving a common signal and a downlink control channel of the cell, and modifying a scrambling sequence and a reference signal sequence in an uplink signal of itself related to the cell ID, etc., by using the received new cell ID at the above designated time point. The above corresponding operations related to carrier transformation is exemplary only, and this embodiment is not limited thereto.

In step 101, if cell ID of the current carrier and that of the transformed carrier are identical, the carrier transformation indication message may carry no cell ID, and may carry cell ID, and this embodiment is not limited thereto.

In step 101, if the transformed carrier is a hybrid carrier, the carrier transformation indication message may further carry a subframe pattern of a subframe carrying a BCT and/or a subframe pattern of a subframe carrying a NCT, such that the base station schedules corresponding user in the subframe carrying the BCT or the subframe carrying the NCT.

In step 102, after notifying the UE that the carrier type is to be changed, the base station may transform the carrier type, such as modifying a content and/or a transmission mode of the system information and a sequence and/or a transmission mode of the common signal. In this embodiment, as scenarios where the carrier type is transformed are different, contents of the system information and common signal needing to be modified are also different. Details shall be described below in conjunction with different scenarios of carrier type transformation.

In an implementation of this embodiment, if the transformed carrier is a hybrid carrier, the base station will further terminate scheduling the UE in a subframe carrying a carrier not supporting access of UE. For example, in a case where transformation from the BCT to a hybrid carrier is performed, for the first type of users and the second type of users, as they do not support the NCT, the base station needs to terminate scheduling these two types of users in the subframe in the hybrid carrier carrying the NCT.

In another implementation of this embodiment, if the transformed carrier is a hybrid carrier and the UE only supports one hybrid type in the hybrid carriers, the base station needs to further terminate scheduling the UE in a subframe carrying a carrier not supporting access of UE. For example, in a case where transformation from the NCT to a hybrid carrier is performed, for the fourth type of users, as they support only the NCT, the base station needs to terminate scheduling this type of users in the subframe in the hybrid carrier carrying the BCT.

In a further implementation of this embodiment, if the transformed carrier is a hybrid carrier, cell IDs of two carriers in the hybrid carrier are identical (abbreviated to as hybrid carrier with identical cell ID) and the user supports all the carrier types in the hybrid carrier, the user may take the hybrid carrier as its serving cell, and the base station may schedule the user in any subframe in the hybrid carrier.

In a yet implementation of this embodiment, if the transformed carrier is a hybrid carrier, cell IDs of two carriers in the hybrid carrier are different (abbreviated to as hybrid carrier with different cell IDs) and the user supports all carrier types in the hybrid carrier, the user may take either one of them as its serving cell, and may also take the two carriers as its serving cell. When the user takes the two carriers as its serving cell, it achieves dual connectivity with two cells. If the user takes one of them as its serving cell, the base station may schedule the user in a subframe where a carrier to which a serving cell of the user corresponds is located after determining the serving cell of the user. And if the user takes the two carriers as its serving cell, the base station may schedule the user in subframes where carriers in the hybrid carrier are located in a time-division multiplexing manner.

In this embodiment, in order to ensure that all the users in the cell can be served after the carrier transformation, the base station may first hand over users that cannot be served by the base station to a carrier that can provide services to the users according to the carrier type to be changed of the cell before transmitting the above carrier transformation indication message to the users of the cell. In this embodiment, a particular handover method is identical to that in an existing specification, which shall not be described herein any further.

With the method of this embodiment, transformation from the BCT to the NCT, transformation from the NCT to the BCT, transformation from the BCT to the hybrid carrier, and transformation from the NCT to the hybrid carrier, may be achieved.

In an implementation of the transformation from the BCT to the NCT, if the cell ID is not changed, the base station may hand over the above first type of users and second type of users first, since both the first type of users and second type of users do not support the NCT, and then perform operations related to carrier transformation according to the method shown in FIG 1. In this implementation, corresponding to step 101, the base station transmits the carrier transformation indication message to the users in its cell (the users in its cell here is users that may continue to be served by the base station). In this implementation, corresponding to step 102, the base station may possibly transmit a synchronization signal (such as a PSS/SSS) and/or a cell-specific signal (such as a cell-specific pilot signal) and/or corresponding system information in the new NCT carrier.

In an implementation of the transformation from the BCT to the NCT, if the cell ID is changed, the base station may likewise hand over the above first type of users and second type of users first, and then perform operations related to carrier transformation according to the method shown in FIG. 1. In this implementation, corresponding to step 101, the base station transmits the carrier transformation indication message to the users in its cell, i.e. the users that may continue to be served by the base station, the carrier transformation indication message may contain cell ID of a new carrier. In this implementation, corresponding to step 102, the base station may possibly transmit a synchronization signal (such as a PSS/SSS) and/or a cell-specific signal (such as a cell-specific pilot signal) and/or corresponding system information in consistence with the new cell ID in the new NCT carrier.

In an implementation of the transformation from the NCT to the BCT, if the cell ID is not changed, the base station may hand over the above forth type of users first, since this type of users do not support the BCT, and then perform operations related to carrier transformation according to the method shown in FIG. 1. In this implementation, corresponding to step 101, the base station transmits the carrier transformation indication message to the users in its cell, i.e. the users that may continue to be served by the base station. In this implementation, corresponding to step 102, the base station may possibly transmit a synchronization signal (such as a PSS/SSS) and/or a cell-specific signal (such as a cell-specific pilot signal) and/or corresponding system information in the new BCT carrier.

In an implementation of the transformation from the NCT to the BCT, if the cell ID is changed, the base station may likewise hand over the above fourth type of users first, and then perform operations related to carrier transformation according to the method shown in FIG. 1. In this implementation, corresponding to step 101, the base station transmits the carrier transformation indication message to the users in its cell, i.e. the users that may continue to be served by the base station, the carrier transformation indication message may contain cell ID of a new carrier. In this implementation, corresponding to step 102, the base station may possibly transmit a synchronization signal (such as a PSS/SSS) and/or a cell-specific signal (such as a cell-specific pilot signal) and/or corresponding system information in consistence with the new cell ID in the new BCT carrier.

In an implementation of the transformation from the BCT to the first type of hybrid carrier, the cell ID is not changed, the base station may hand over the above first type of users first, since the first type of users do not support the NCT and are unable to perform RRM measurement on the BCT carrier in the subframe pattern manner, and then perform operations related to carrier transformation according to the method shown in FIG. 1. In this implementation, corresponding to step 101, the base station transmits the carrier transformation indication message to the users in its cell, i.e. users that may continue to be served by the base station and to which the hybrid carrier is nontransparent. As users that may continue to be served by the base station and to which the hybrid carrier is nontransparent may be the third type of users or the fourth type of users, the carrier transformation indication message may contain the subframe pattern of the subframe carrying the BCT and/or the subframe pattern of the subframe carrying the NCT. In this implementation, corresponding to step 102, the base station may possibly transmit a single synchronization signal (such as a PSS/SSS) and/or a cell-specific signal (such as a cell-specific pilot signal) and/or corresponding system information in the new NCT carrier. The NCT system information may indicate that this is a hybrid carrier. Alternatively, the base station may further modify the BCT carrier system information, so that the BCT carrier system information may indicate that this is a hybrid carrier. In this implementation, the nontransparency refers to that the users are aware that the transformed carrier is a hybrid carrier, similarly hereinafter.

In an implementation of the transformation from the BCT to the second type of hybrid carrier, the cell ID is changed, the base station may hand over the above first type of users first, since the first type of users do not support the NCT and are unable to perform RRM measurement on the BCT carrier in the subframe pattern manner, and then perform operations related to carrier transformation according to the method shown in FIG 1. In this implementation, corresponding to step 101, the base station transmits the carrier transformation indication message to the users in its cell, i.e. users that may continue to be served by the base station and to which the hybrid carrier is nontransparent. Here, as the users that may continue to be served by the base station and to which the hybrid carrier is nontransparent may be the third type of users or the fourth type of users, the carrier transformation indication message may contain the subframe pattern of the subframe carrying the BCT and/or the subframe pattern of the subframe carrying the NCT. Furthermore, as the cell ID is changed, the carrier transformation indication message may further contain cell ID of the new NCT carrier. In this implementation, corresponding to step 102, the base station may possibly transmit a single synchronization signal (such as a PSS/SSS) and/or a cell-specific signal (such as a cell-specific pilot signal) and/or corresponding system information in the new NCT carrier. The NCT system information may indicate that this is a hybrid carrier. Alternatively, the base station may further modify the system information of the BCT carrier, so that the system information may indicate that this is a hybrid carrier.

In an implementation of the transformation from the NCT to the first type of hybrid carrier, the cell ID is not changed. As the current carrier is an NCT, users served by the NCT contains no the first type of users and the second type of users. In this case, the base station may directly perform operations related to carrier transformation according to the method shown in FIG 1. In this implementation, corresponding to step 101, the base station transmits the carrier transformation indication message to the users in its cell, i.e. users that may continue to be served by the base station and to which the hybrid carrier is nontransparent. Here, as the users that may continue to be served by the base station and to which the hybrid carrier is nontransparent may be the third type of users or the fourth type of users, the carrier transformation indication message may contain the subframe pattern of the subframe carrying the BCT and/or the subframe pattern of the subframe carrying the NCT. In this implementation, corresponding to step 102, the base station may possibly transmit a single synchronization signal (such as a PSS/SSS) and/or a cell-specific signal (such as a cell-specific pilot signal) and/or corresponding system information in the new BCT carrier. Alternatively, it may be indicated in the system information of the BCT carrier that this is a hybrid carrier. Alternatively, the base station may further modify the system information of the NCT carrier, so that the system information may indicate that this is a hybrid carrier.

In an implementation of the transformation from the NCT to the second type of hybrid carrier, the cell ID is changed. Likewise, as the current carrier is an NCT, users served by the NCT contains no the first type of users and the second type of users. In this case, the base station may directly perform operations related to carrier transformation according to the method shown in FIG. 1. In this implementation, corresponding to step 101, the base station transmits the carrier transformation indication message to users in its cell, i.e. users that may continue to be served by the base station and to which the hybrid carrier is nontransparent. Here, as the users that may continue to be served by the base station and to which the hybrid carrier is nontransparent may be the third type of users or the fourth type of users, the carrier transformation indication message may contain the subframe pattern of the subframe carrying the BCT and/or the subframe pattern of the subframe carrying the NCT. Furthermore, as the cell ID is changed, the carrier transformation indication message may further contain cell ID of the new NCT carrier and/or the cell ID of the new BCT carrier. In this implementation, corresponding to step 102, the base station may possibly transmit a single synchronization signal (such as a PSS/SSS) and/or a cell-specific signal (such as a cell-specif pilot signal) and/or corresponding system information in the new BCT carrier. Alternatively, it may be indicated in the system information of the BCT carrier that this is a hybrid carrier. Alternatively, the base station may further modify the system information in the hybrid carrier, so that the system information may indicate that this is a hybrid carrier.

In an implementation of the transformation from the first type of hybrid carrier to the BCT, the cell ID is not changed, the base station may hand over the above fourth type of users first, since the fourth type of users do not support the BCT, and then perform operations related to carrier transformation according to the method shown in FIG 1. In this implementation, corresponding to step 101, the base station transmits the carrier transformation indication message to users that may continue to be served by the base station and to which the hybrid carrier is nontransparent. In this implementation, corresponding to step 102, alternatively, the base station may modify the BCT system information, removing a part indicating a hybrid carrier.

In an implementation of the transformation from the first type of hybrid carrier to the NCT, the cell ID is not changed. Taken into consideration that users served by the first type of hybrid carrier may only be the second, the third or the fourth type of users, the base station may hand over the above second type of users first, and then perform operations related to carrier transformation according to the method shown in FIG 1. In this implementation, corresponding to step 101, the base station transmits the carrier transformation indication message to users that may continue to be served by the base station and to which the hybrid carrier is nontransparent. In this implementation, corresponding to step 102, the base station may modify the NCT system information, removing a part indicating a hybrid carrier.

In an implementation of the transformation from the second type of hybrid carrier to the BCT, the cell ID is changed. As the fourth type of users do not support the BCT, the base station may hand over the above fourth type of users first, and then perform operations related to carrier transformation according to the method shown in FIG 1. In this implementation, corresponding to step 101, the base station transmits the carrier transformation indication message to users that may continue to be served by the base station and to which the hybrid carrier is nontransparent. In this implementation, corresponding to step 102, alternatively, the base station may modify the BCT system information, removing a part indicating a hybrid carrier.

In an implementation of the transformation from the second type of hybrid carrier to the NCT, the cell ID is not changed. Taken into consideration that users served by the first type of hybrid carrier may only be the second, the third or the fourth type of users, the base station may hand over the above second type of users first, and then perform operations related to carrier transformation according to the method shown in FIG 1. In this implementation, corresponding to step 101, the base station transmits the carrier transformation indication message to users that may continue to be served by the base station and to which the hybrid carrier is nontransparent. In this implementation, corresponding to step 102, the base station may modify the NCT system information, removing a part indicating a hybrid carrier.

With the method for transforming carrier of this embodiment, advantages of the BCT and NCT may be better used, and stable transition of serving the UE by the carriers may be achieved.

### Embodiment 2

An embodiment of the present disclosure further provides a method for transforming carrier, which is processing at a UE side corresponding to the method of Embodiment 1. FIG 2 is a flowchart of the method. Referring to FIG. 2, the method includes:
step 201: determining a carrier transformation time point by UE after receiving a carrier transformation indication message transmitted by a base station, according to a predefined rules or time indication information carried in the carrier transformation indication message; and
step 202: performing operations related to carrier transformation by the UE at a determined carrier transformation time point.

In step 201, as described in Embodiment 1, the base station and the UE may agree a carrier transformation time point in advance, and time indication information may also be carried by the carrier transformation indication message, and the carrier transformation time point is indicated by the time indication information, thereby users may perform operations related to carrier transformation at the determined carrier transformation time point.

In step 202, the UE may identify cell system information, receive a cell common signal and a downlink control signal, and update a scrambling sequence and a reference signal sequence related to the cell ID in an uplink signal of the UE, by using the cell ID contained in the carrier transformation indication message (the carrier transformation indication message contains cell ID of a new cell or cell ID of an original cell, the cell ID being changed or being not changed) or the original cell ID (the carrier transformation indication message contains no cell ID, the cell ID being not changed) at the carrier transformation time point, which shall not be described herein any further.

In an implementation of this embodiment, if the transformed carrier is a hybrid carrier with identical cell ID and the UE supports all carriers in the hybrid carrier, the UE may take the hybrid carrier as its serving cell, and in this case, the base station may schedule the UE in any subframe in the hybrid carrier.

In another implementation of this embodiment, if the transformed carrier is a hybrid carrier with different cell IDs and the UE supports all carriers in the hybrid carrier, the UE may take two carriers in the hybrid carrier as its serving cell, thereby achieving dual connectivity with cells corresponding to the two carriers, and the base station may schedule the UE in the two carriers in a time-division multiplexing manner; and the UE may also take one carrier in the hybrid carrier as its serving cell, and use only the subframe where the carrier is located, and the base station schedules the UE in a subframe where a carrier to which a serving cell of the UE corresponds is located after determining the serving cell of the UE.

In this embodiment, if the transformed carrier is a hybrid carrier, for UE unable to identify the hybrid carrier, in an implementation, if a current carrier is a serving cell of the UE before it is transformed into a hybrid carrier, the UE directly takes the hybrid carrier as its serving cell, only if the base station avoids to schedule the UE in the subframe not supporting access of UE. In another implementation, if the serving cell of the UE is not a cell using the hybrid carrier, the serving cell of the UE may preconfigure that the UE measures carriers in the hybrid subframe supported by the UE in a subframe pattern manner, and then hand over UE satisfying conditions to the hybrid carrier according to a result of measurement, such that the UE takes the cell using the hybrid carrier as its serving cell, and in this case, a base station of a new cell avoids to schedule the UE in the subframe not supporting the access of UE. In a further implementation, if the UE powers on in coverage of the cell using the hybrid carrier, the UE discovers and measures the cell in a manner of normal carrier, and the UE may successfully access to the cell if a result of measurement satisfies an access condition. And in this case, only if the base station of the cell avoids to schedule the UE in the subframe not supporting the access of UE. In this implementation, resources available for transmitting PRACH preambles carried in system information of the carriers supported by the UE are all at subframes used for carrying the carriers.

In this embodiment, as the carrier transformation indication message has been described in detail in Embodiment 1, it shall not be described herein any further.

With the method for transforming carrier of this embodiment, advantages of the BCT and NCT may be better used, and stable transition of serving the UE by the carriers may be achieved.

### Embodiment 3

An embodiment of the present disclosure further provides a method for transforming carrier. FIG 3 is a flowchart of the method. Referring to FIG. 3, the method includes:
step 301: handing over all UEs served by a cell to carriers capable of providing services to the UEs by a base station of the cell;
   wherein, a particular method of handover is identical to that of an existing specification, which shall not be described herein any further;
step 302: transforming the carrier type, and modifying a content and/or a transmission mode of corresponding system information and a sequence and/or a transmission mode of a common signal, by the base station.

In this embodiment, carriers out of the current carrier that may provide services to the UEs served by the cell are taken as transition, and before the carrier type is transformed, all the UEs are handed over, and then the carrier type is transformed. Thereafter, base stations that may provide services to the UEs (that is, base stations to which the carriers providing services to the UEs correspond, which are abbreviated to as transition carriers, for the sake of convenience of description and understanding) hand over the UE back according to an actual situation. Processing of the base stations to which the transition carriers correspond shall be described in other embodiments.

In this embodiment, the UEs that are handed over for carrier transformation and are handed over back to the transformed carrier after the carrier transformation may operate in the transformed carrier.

In an implementation, if the transformed carrier is a hybrid carrier and the UEs changed its serving cell from the current carrier to the transformed carrier support only one carrier type in the hybrid carrier, the base station terminates scheduling the UEs in a subframe carrying a carrier not supporting access of UE. For example, if the first type of users and second type of users do not support the NCT, the base station terminates scheduling the UEs in a subframe carrying the NCT after being transformed to the hybrid carrier. For another example, if the fourth type of users do not support the BCT, the base station terminates scheduling the UE in a subframe carrying the BCT after being transformed to the hybrid carrier.

In another implementation, if the transformed carrier is a hybrid carrier with identical cell ID and the UEs support all carrier types in the hybrid carrier, the UEs may take the hybrid carrier as its serving cell, and the base station may schedule the UEs in any subframe in the hybrid carrier.

In a further implementation, if the transformed carrier is a hybrid carrier with different cell IDs and the UEs support all carrier types in the hybrid carrier, the UE may take one carrier in the hybrid carrier as its serving cell. In this case, the base station determines the serving cell of the UEs, and schedules the UEs in a subframe where a carrier to which the serving cell of the UEs corresponds is located. And the UEs may also take these two carriers as its serving cell, and achieves dual connectivity with the two cells in a time-division multiplexing manner. And in this case, the base station may schedule the UEs in a time-division multiplexing manner in subframes where carriers in the hybrid carrier are located.

With the method of this embodiment, transformation from the BCT to the NCT, transformation from the NCT to the BCT, transformation from the BCT to the hybrid carrier, and transformation from the NCT to the hybrid carrier, may be achieved.

In an implementation of the transformation from the BCT to the NCT, if the cell ID is not changed, corresponding to step 302, the base station may transmit a synchronization signal (such as a PSS/SSS) and/or a cell-specific signal (such as a cell-specific pilot signal) and/or corresponding system information in the new NCT carrier.

In an implementation of the transformation from the BCT to the NCT, if the cell ID is changed, corresponding to step 302, the base station may transmit a synchronization signal (such as a PSS/SSS) and/or a cell-specific signal (such as a cell-specific pilot signal) and/or corresponding system information in consistence with new cell ID in the new NCT carrier.

In an implementation of the transformation from the NCT to the BCT, if the cell ID is not changed, corresponding to step 302, the base station may transmit a synchronization signal (such as a PSS/SSS) and/or a cell-specific signal (such as a cell-specific pilot signal) and/or corresponding system information in the new BCT carrier.

In an implementation of the transformation from the NCT to the BCT, if the cell ID is changed, corresponding to step 302, the base station may transmit a synchronization signal (such as a PSS/SSS) and/or a cell-specific signal (such as a cell-specific pilot signal) and/or corresponding system information in consistence with new cell ID in the new BCT carrier.

In an implementation of the transformation from the BCT to the first type of hybrid carrier, the cell ID is not changed, corresponding to step 302, the base station may transmit a single synchronization signal (such as a PSS/SSS) and/or a cell-specific signal (such as a cell-specific pilot signal) and/or corresponding system information in the new NCT carrier. Alternatively, the NCT system information may indicate that this is a hybrid carrier. Alternatively, the base station may further modify the system information of the BCT carrier, so that the system information may indicate that this is a hybrid carrier.

In an implementation of the transformation from the BCT to the second type of hybrid carrier, the cell ID is changed, corresponding to step 302, the base station may transmit a single synchronization signal (such as a PSS/SSS) and/or a cell-specific signal (such as a cell-specific pilot signal) and/or corresponding system information in the new NCT carrier. Alternatively, the NCT system information may indicate that this is a hybrid carrier. Alternatively, the base station may further modify the system information of the BCT carrier, so that the system information may indicate that this is a hybrid carrier.

In an implementation of the transformation from the NCT to the first type of hybrid carrier, the cell ID is not changed, corresponding to step 302, the base station may transmit a single synchronization signal (such as a PSS/SSS) and/or a cell-specific signal (such as a cell-specific pilot signal) and/or system information in the new BCT carrier. Alternatively, it may be indicated in the system information of the BCT carrier that this is a hybrid carrier. Alternatively, the base station may further modify the system information of the NCT carrier, so that the system information may indicate that this is a hybrid carrier.

In an implementation of the transformation from the NCT to the second type of hybrid carrier, the cell ID is changed, corresponding to step 302, the base station may transmit a single synchronization signal (such as a PSS/SSS) and/or a cell-specific signal (such as a cell-specific pilot signal) and/or system information in the new BCT carrier. Alternatively, it may be indicated in the system information of the BCT carrier that this is a hybrid carrier. Alternatively, the base station may further modify the system information of the NCT carrier, so that the system information may indicate that this is a hybrid carrier.

In an implementation of the transformation from the first type of hybrid carrier to the BCT, the cell ID is not changed, corresponding to step 302, alternatively, the base station may modify the BCT system information, removing a part indicating a hybrid carrier.

In an implementation of the transformation from the first type of hybrid carrier to the NCT, the cell ID is not changed, corresponding to step 302, alternatively, the base station may modify the NCT system information, removing a part indicating a hybrid carrier.

In an implementation of the transformation from the second type of hybrid carrier to the BCT, the cell ID is changed, corresponding to step 302, alternatively, the base station may modify the BCT system information, removing a part indicating a hybrid carrier.

In an implementation of the transformation from the second type of hybrid carrier to the NCT, the cell ID is changed, corresponding to step 302, alternatively, the base station may modify the NCT system information, removing a part indicating a hybrid carrier.

With the method for transforming carrier of this embodiment, advantages of the BCT and NCT may be better used, and stable transition of serving the UE by the carriers may be achieved.

### Embodiment 4

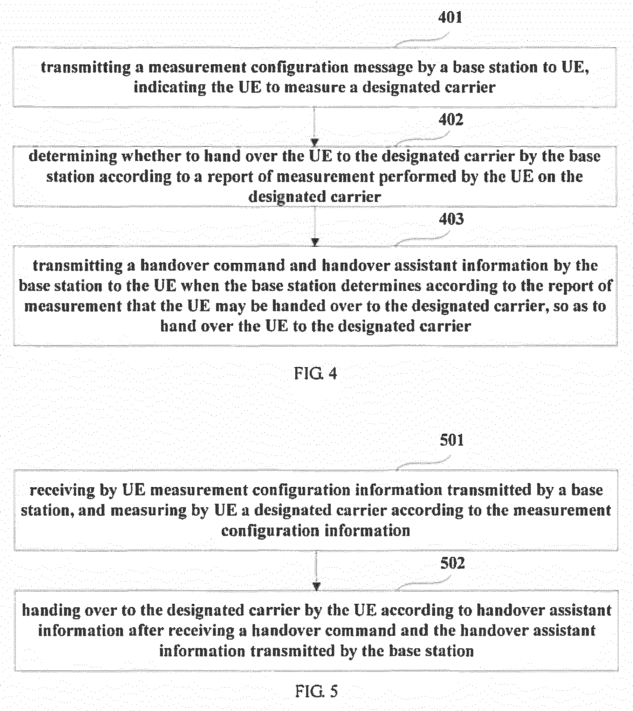

An embodiment of the present disclosure further provides a method for transforming carrier, which is processing of transition carrier corresponding to the method of Embodiment 3. FIG. 4 is a flowchart of the method. Referring to FIG. 4, the method includes:
step 401: transmitting a measurement configuration message by a base station to UE, indicating the UE to measure a designated carrier;
   wherein, the measurement configuration message may be carried via RRC signaling, that is, the base station may configure the UE via the RRC signaling to measure the designated carrier;
   wherein, corresponding to the method of Embodiment 3, the base station may configure the UE to measure the transformed carrier in Embodiment 2; wherein, the UE may be UE which is handed over from the base station of Embodiment 3 to the base station of this embodiment, and the UE supports the above transformed carrier; and the UE may also be UE in a cell determined by the base station of this embodiment according to a policy of its own, and this embodiment is not limited thereto;
step 402: determining whether to hand over the UE to the designated carrier by the base station according to a report of measurement performed by the UE on the designated carrier;
   wherein, an existing specification may be referred to for a particular method of determination, which shall not be described herein any further;
step 403: transmitting a handover command and handover assistant information by the base station to the UE when the base station determines according to the report of measurement that the UE may be handed over to the designated carrier, so as to hand over the UE to the designated carrier.

In this embodiment, in order to speed up handover of the UE back to the transformed carrier in Embodiment 3, the base station of this embodiment may provide some assistant information needed by the handover to the UE (referred to as handover assistant information in this embodiment). The handover assistant information may be contained in the above handover command and is carried by the above handover command, and may also be carried by other messages, and this embodiment is not limited thereto. Particular implementations of the assistant information shall be described in the following embodiments.

In this embodiment, corresponding to different handover scenarios in Embodiment 3, contents configured in step 401 are different.

In an implementation of the transformation from the BCT to the NCT, no matter whether the cell ID is changed, corresponding to step 401, the base station may configure the UE via the above RRC signaling to measure the above transformed carrier by using a manner of NCT.

In an implementation of the transformation from the NCT to the BCT, no matter whether the cell ID is changed, corresponding to step 401, the base station may configure the UE via the above RRC signaling to measure the above transformed carrier by using a manner of BCT.

In an implementation of the transformation from the BCT or the NCT to the first type of hybrid carrier or the second type of hybrid carrier, corresponding to step 401, the base station may configure the UE with a subframe pattern of a subframe carrying the BCT, so that the UE uses the subframe pattern to measure the above transformed carrier in the manner of BCT; and/or the base station may also configure the UE with a subframe pattern of a subframe carrying the NCT, so that the UE uses the subframe pattern to measure the above transformed carrier in the manner of NCT.

In an implementation of the transformation from the first type of hybrid carrier or the second type of hybrid carrier to the BCT, corresponding to step 401, the base station may configure the UE via the above RRC signaling to measure the transformed carrier in the manner of BCT.

In an implementation of the transformation from the first type of hybrid carrier or the second type of hybrid carrier to the NCT, corresponding to step 401, the base station may configure the UE via the above RRC signaling to measure the transformed carrier in the manner of NCT.

With the method for transforming carrier of this embodiment, advantages of the BCT and NCT may be better used, and stable transition of serving the UE by the carriers may be achieved.

### Embodiment 5

An embodiment of the present disclosure further provides a method for transforming carrier, which is processing at a UE side corresponding to the method of Embodiment 4. FIG 5 is a flowchart of the method. Referring to FIG 5, the method includes:
step 501: receiving by UE measurement configuration information transmitted by a base station, and measuring by UE a designated carrier according to the measurement configuration information;
   wherein, the measurement configuration information may be carried via RRC signaling, which is as described in Embodiment 4, and shall not be described herein any further;
   wherein, after the measurement, the UE will feed back a report of measurement to the base station, and the base station will determine whether to hand over the UE to the above designated carrier accordingly;
step 502: handing over to the designated carrier by the UE according to handover assistant information after receiving a handover command and the handover assistant information transmitted by the base station;
   wherein, if the base station determines to hand over the UE to the above designated carrier, it transmits the handover command to the UE of this embodiment; and in order speed up a handover process, the handover assistant information may be carried by the handover command, and may also be carried by other messages; thus, the UE may use the handover assistant information to hand over to the carrier designated by the base station, thereby speeding up the handover process;
   wherein, the handover assistant information shall be described in detail in the following embodiments.

With the method for transforming carrier of this embodiment, advantages of the BCT and NCT may be better used, and stable transition of serving the UE by the carriers may be achieved.

### Embodiment 6

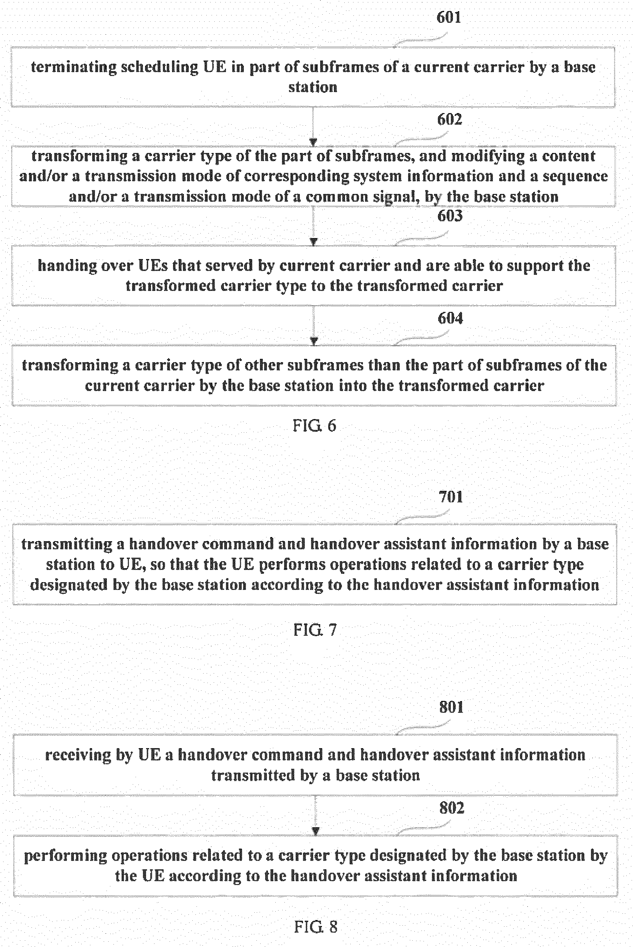

An embodiment of the present disclosure further provides a method for transforming carrier. FIG 6 is a flowchart of the method. Referring to FIG 6, the method includes:
step 601: terminating scheduling UE in part of subframes of a current carrier by a base station;
step 602: transforming a carrier type of the part of subframes, and modifying a content and/or a transmission mode of corresponding system information and a sequence and/or a transmission mode of a common signal, by the base station;
step 603: handing over UEs served by current carrier and are able to support the transformed carrier type to the transformed carrier; and
step 604: transforming a carrier type of other subframes than the part of subframes of the current carrier by the base station into the transformed carrier.

In this embodiment, if cell ID changes in handover from a BCT carrier to an NCT carrier, or vice versa, all UEs have to be handed over to other carriers during the handover, and then are handed over back. In this embodiment, hybrid carrier is taken as a transition state, so as to avoid influence on other cells, and handover of the UE from an old carrier to a new carrier is achieved in the cell.

In an implementation of this embodiment, in order to avoid providing some UEs with no service in the cell due to that the UEs do not support the transformed carriers, before step 601, the base station may first hand over UEs to which the base station is unable to provide services to a carrier which is able to provide services to the UEs according to the carrier type of the cell that is to be changed. An existing specification may be referred to for a particular method of handover, which shall not be described herein any further.

In step 601, an object of terminating scheduling UE in part of subframes of a current carrier is to first perform operations related to carrier transformation on this part of subframes. In an implementation, for UE of higher releases supporting RRM measurement performed in a subframe pattern manner, the base station may transmit configuration information containing subframe patterns of the other subframes than the part of subframes by the base station to the UE, so that the UE performs the RRM measurement in a manner of subframe pattern according to the subframe pattern. In this embodiment, the configuration information may be achieved via RRC signaling.

In step 602, Embodiment 1 may be referred to for the modification of the system information and the common signal, which shall not be described herein any further.

In step 603, the base station may first configure the UE via the RRC signaling to measure the transformed carrier in the manner of subframe pattern, such as transmitting carrier measurement configuration information to the UE in the cell, indicating the UE to measure the transformed carrier, and then determine according to a result of measurement performed by the UE on the transformed carrier whether to hand over the UE to the above transformed carrier. In this embodiment, the base station hands over UE in the cell that is unable to change its serving cell from the current carrier to carriers that is able to provide services to it, and hands over UE served by current carrier and are able to support the transformed carrier type to the transformed carrier.

In step 603, similar to Embodiment 4, the base station may also transmit the handover assistant information to the UE, so that the UE changes its serving cell from the current carrier to the transformed carrier according to the handover assistant information. Thus, the handover of the UE may be calculated. Furthermore, an implementation of the handover assistant information shall be described in the following embodiments.

In step 603, likewise, for the UE of higher releases supporting operations in a subframe pattern manner, the base station may transmit configuration information containing subframe patterns of subframes of the transformed carrier to the UE, so that the UE operates in a manner of subframe pattern according to the subframe pattern (for example, the UE only monitors a physical downlink control channel (PDCCH) in a subframe carrying a carrier to which it accesses; or if no enhanced physical downlink control channel (ePDCCH)) is separately configured, the UE only monitors the ePDCCH in the subframe carrying the carrier to which it accesses). In this embodiment, the configuration information may be carried by a message in the handover process, such as being carried in configuration handover information or a message 2 in a random access process, and this embodiment is not limited thereto. Thus, the UE of higher releases may operate in the transformed carrier.

In this embodiment, after transforming the carrier type of the part of the subframes, the base station may schedule the UE in this part of the subframes. For example, the base station may transmit the configuration information containing the subframe pattern of the subframe carrying the transformed carrier to the UE, so that the UE operates in a manner of subframe pattern according to the subframe pattern.

In this embodiment, after the base station transforms the other subframes into the transformed subframes, the base station may schedule the UE in all the subframes. And in this case, the base station may transmit a notification message to the UE in the cell, notifying the UE that it is possibly scheduled in any subframe. Thus, for the UE of higher releases supporting operations in the manner of subframe pattern, its operations in the manner of subframe pattern may be terminated.

With the method of this embodiment, the transformation from the BCT to the NCT (with the cell ID being changed) and the transformation from the NCT to the BCT (with the cell ID being changed) may be achieved.

In an implementation of the transformation from the BCT to the NCT, if the cell ID is changed, the base station may first hand over the first type of users and the second type of users, since both the first type of users and second type of users do not support the NCT. Then, corresponding to step 602, the base station may transmit a synchronization signal (such as a PSS/SSS) and/or a cell-specific signal (such as a cell-specific pilot signal) and/or corresponding system information in consistence with new cell ID in the new NCT carrier.

In an implementation of the transformation from the NCT to the BCT, if the cell ID is changed, the base station may first hand over the fourth type of users, since the fourth type of users do not support the BCT. Then, corresponding to step 602, the base station may transmit a synchronization signal (such as a PSS/SSS) and/or a cell-specific signal (such as a cell-specific pilot signal) and/or corresponding system information in consistence with new cell ID in the new BCT carrier.

In this embodiment, the processing at the UE side corresponding to the processing at the base station side may be achieved by using the method of Embodiment 5, which shall not be described herein any further.

With the method for transforming carrier of this embodiment, advantages of the BCT and NCT may be better used, and stable transition of serving the UE by the carriers may be achieved.

### Embodiment 7

An embodiment of the present disclosure further provides a method for transforming carrier. FIG 7 is a flowchart of the method. Referring to FIG. 7, the method includes:
step 701: transmitting a handover command and handover assistant information by a base station to UE, so that the UE performs operations related to a carrier type designated by the base station according to the handover assistant information.

In this embodiment, when the base station determines to hand over the UE to other cells to which carriers supported by the UE correspond, such as the scenario in Embodiment 4 or the scenario in Embodiment 6, the base station speeds up the handover of the UE by transmitting some handover assistant information to the UE.

In this embodiment, the handover assistant information may be information on downlink synchronization, may be information on uplink random access, and may also be indication information on whether a current carrier is at the same state as that of a transformed carrier, or may be any combination of the above information, and this embodiment is not limited thereto.

In this embodiment, corresponding to the scenarios in embodiments 4 and 6, the UE may be indicated via the above information on downlink synchronization that downlink timing of the transformed carrier is identical to that of the current carrier (a carrier before transformation), so as to speed up the handover of the UE; for example, the assistant information may enable the UE to quickly position a synchronization signal.

In this embodiment, corresponding to the scenarios in embodiments 4 and 6, the UE may be indicated via the above information on uplink random access that timing advance (TA) of the carrier before transformation, and a cell ratio network temporary identifier (C-RNTI) used in the carrier before transformation may still be used in the transformed carrier. Thus, the UE may avoid random access in a target carrier (the carrier after transformation), and is handed over directly to a new carrier.

In this embodiment, it may be defined that two carriers are in the same state, and in such a state, it may be deemed that uplink-downlink timing of the two carriers are identical; or it may be defined that two carriers are in the same state, and in such a state, the UE may not perform random access, and hands over directly from one carrier to the other after receiving the handover command. Hence, corresponding to the scenarios in embodiments 4 and 6, the base station may directly notify the UE whether the carrier before transformation and the carrier after transformation are in the above state. When they are in the above state, the UE may directly omit or speed up the downlink synchronization and/or uplink synchronization process, or directly hand over to the target carrier.

With the method of this embodiment, the process of handover of the UE to the new carrier is sped up.

### Embodiment 8

An embodiment of the present disclosure further provides a method for transforming carrier, which is processing at a UE side corresponding to the method of Embodiment 7. Referring to FIG 8, the method includes:
step 801: receiving by UE a handover command and handover assistant information transmitted by a base station; and
step 802: performing operations related to a carrier type designated by the base station by the UE according to the handover assistant information.

In this embodiment, the handover assistant information has been described in Embodiment 7, the contents of which being incorporated herein, which shall not be described herein any further.

With the method of this embodiment, the process of handover of the UE to the new carrier is sped up.

An embodiment of the present disclosure further provides a base station, as described in Embodiment 9 below. As principles of the base station for solving the problem are similar to that of the method of Embodiment 1, the implementation of the method of Embodiment 1 may be referred to for particular implementation of the base station, with identical contents being not going to be described herein any further.

### Embodiment 9

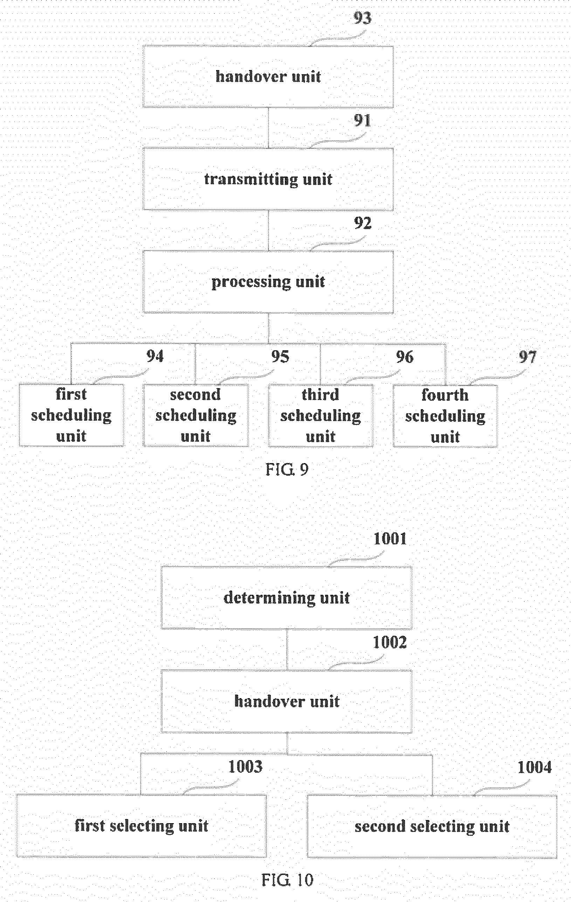

An embodiment of the present disclosure further provides a base station. FIG. 9 is a schematic diagram of a structure of the base station. Referring to FIG 9, the base station includes:
a transmitting unit 91 configured to transmit a carrier transformation indication message to UE served by a cell corresponding to the base station, and indicate the UE via the carrier transformation indication message that a carrier type of the cell is to be changed; and
a processing unit 92 configured to transform a carrier type, and modify a content and/or a transmission mode of corresponding system information and a sequence and/or a transmission mode of a common signal.

In an implementation, the base station further includes:
a handover unit 93 configured to hand over UE unable to be served to carriers able to provide services to the UE according to the carrier type of the cell to be changed before the transmitting unit 91 transmits the carrier transformation indication message to the UE.

In this embodiment, the carrier transformation indication message includes cell ID of the cell the carrier type of which is to be changed and/or a subframe pattern of subframes carrying a BCT and/or a subframe pattern of subframes carrying a NCT.

In an implementation, the base station further includes:
a first scheduling unit 94 configured to terminate scheduling the UE in a subframe carrying a carrier not supporting UE access when the transformed carrier is a hybrid carrier.

In an implementation, the base station further includes:
a second scheduling unit 95 configured to terminate scheduling the UE in a subframe carrying a carrier not supporting UE access when the transformed carrier is a hybrid carrier and the UE supports only one carrier type in the hybrid carrier.

In an implementation, the base station further includes:
a third scheduling unit 96 configured to schedule the UE in any subframe in a hybrid carrier if the transformed carrier is a hybrid carrier with identical cell ID and the UE supports all carrier types in the hybrid carrier.

In an implementation, the base station further includes:
a fourth scheduling unit 97 configured to determine a serving cell of the UE, and schedule the UE in subframes where a carrier to which the serving cell of the UE corresponds is carried, or schedule the UE in subframes where carriers of different carrier types in the hybrid carrier are carried in a time-division multiplexing manner, if the transformed carrier is a hybrid carrier with more than one cell ID and the UE supports all carrier types in the hybrid carrier.

With the base station of this embodiment, advantages of the BCT and NCT may be better used, and stable transition of serving the UE by the carriers may be achieved.

An embodiment of the present disclosure further provides UE, as described in Embodiment 10 below. As principles of the UE for solving the problem are similar to that of the method of Embodiment 2, the implementation of the method of Embodiment 2 may be referred to for particular implementation of the UE, with identical contents being not going to be described herein any further.

### Embodiment 10

An embodiment of the present disclosure further provides UE. FIG 10 is a schematic diagram of a structure of the UE. Referring to FIG 10, the UE includes:
a determining unit 1001 configured to determine a carrier transformation time point after receiving a carrier transformation indication message transmitted by a base station, according to a predefined rules or time indication information carried in the carrier transformation indication message; and
a handover unit 1002 configured to perform operations related to carrier transformation at a carrier transformation time point determined by the determining unit.

In an implementation, when the carrier transformation indication message includes cell ID of the transformed carrier, the handover unit identifies system information, receives a cell specific common signal and a downlink control signal and updates a scrambling sequence and a reference signal sequence related to the cell ID in an uplink signal of the UE, by using the cell ID of the transformed carrier at the carrier transformation time point.

In an implementation, the UE further includes:
a first selecting unit 1003 configured to take a hybrid carrier as its serving cell if the transformed carrier is a hybrid carrier with an identical cell ID and the UE supports all carrier types in the hybrid carrier.

In an implementation, the UE further includes:
a second selecting unit 1004 configured to take a hybrid carrier as its serving cell, or take one carrier in the hybrid carrier as its serving cell, if the transformed carrier is a hybrid carrier with more than one cell ID and the UE supports all carrier types in the hybrid carrier.

With the UE of this embodiment, advantages of the BCT and NCT may be better used, and stable transition of serving the UE by the carriers may be achieved.

An embodiment of the present disclosure further provides a base station, as described in Embodiment 11 below. As principles of the base station for solving the problem are similar to that of the method of Embodiment 3, the implementation of the method of Embodiment 3 may be referred to for particular implementation of the base station, with identical contents being not going to be described herein any further.

### Embodiment 11

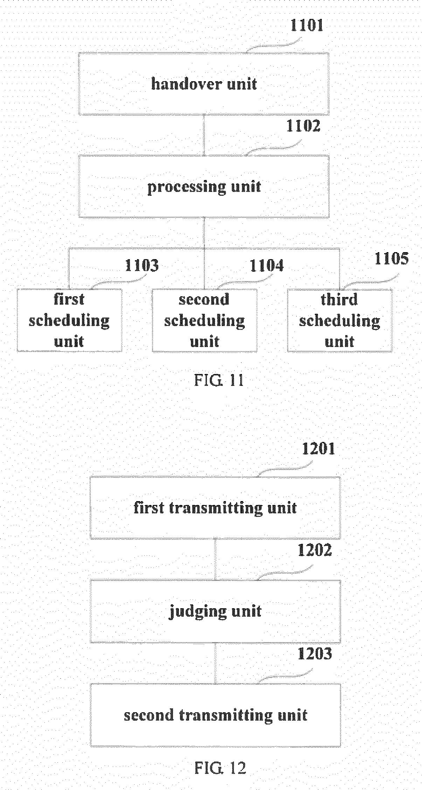

An embodiment of the present disclosure further provides a base station. FIG. 11 is a schematic diagram of a structure of the base station. Referring to FIG 11, the base station includes:
a handover unit 1101 configured to hand over all UEs which are served by a cell corresponding to the base station to carriers capable of providing services to the UE; and
a processing unit 1102 configured to transform a carrier type, and modify a content and/or a transmission mode of corresponding system information and a sequence and/or a transmission mode of a common signal.

In an implementation, the base station further includes:
a first scheduling unit 1003 configured to terminate scheduling the UE in a subframe carrying a carrier not supporting UE access when the transformed carrier is a hybrid carrier and the UE changing its serving cell from the current carrier to the transformed carrier supports only one carrier type in the hybrid carrier.

In an implementation, the base station further includes:
a second scheduling unit 1004 configured to schedule the UE in any subframe in a hybrid carrier if the transformed carrier is a hybrid carrier with identical cell ID and the UE supports all carrier types in the hybrid carrier.

In an implementation, the base station further includes:
a third scheduling unit 1005 configured to determine a serving cell of the UE, and schedule the UE in subframes where a carrier to which the serving cell of the UE corresponds is carried, or schedule the UE in subframes where carriers of different carrier types in a hybrid carrier are carried in a time-division multiplexing manner, if the transformed carrier is the hybrid carrier with more than one cell ID and the UE supports all carrier types in the hybrid carrier.

With the base station of this embodiment, advantages of the BCT and NCT may be better used, and stable transition of serving the UE by the carriers may be achieved.

An embodiment of the present disclosure further provides a base station, as described in Embodiment 12 below. As principles of the base station for solving the problem are similar to that of the method of Embodiment 4, the implementation of the method of Embodiment 4 may be referred to for particular implementation of the base station, with identical contents being not going to be described herein any further.

### Embodiment 12

An embodiment of the present disclosure further provides a base station. FIG 12 is a schematic diagram of a structure of the base station. Referring to FIG. 12, the base station includes:
a first transmitting unit 1201 configured to transmit a measurement configuration message to UE, indicating the UE to measure a designated carrier;
a judging unit 1202 configured to determine whether to hand over the UE to the designated carrier according to a report of measurement performed by the UE on the designated carrier; and
a second transmitting unit 1203 configured to transmit handover assistant information to the UE when the judging unit 1202 determines to hand over the UE to the designated carrier, so as to hand over the UE to the designated carrier.

With the base station of this embodiment, advantages of the BCT and NCT may be better used, and stable transition of serving the UE by the carriers may be achieved.

An embodiment of the present disclosure further provides UE, as described in Embodiment 13 below. As principles of the UE for solving the problem are similar to that of the method of Embodiment 5, the implementation of the method of Embodiment 5 may be referred to for particular implementation of the UE, with identical contents being not going to be described herein any further.

### Embodiment 13

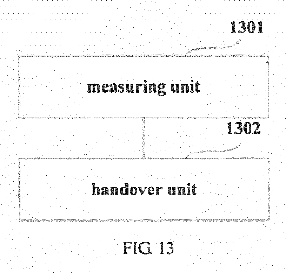

An embodiment of the present disclosure further provides UE. FIG 13 is a schematic diagram of a structure of the UE. Referring to FIG 13, the UE includes:
a measuring unit 1301 configured to measure a carrier designated by a base station according to received measurement configuration information transmitted by the base station; and
a handover unit 1302 configured to hand over to the designated carrier according to handover assistant information after receiving a handover command and the handover assistant information transmitted by the base station.

With the UE of this embodiment, advantages of the BCT and NCT may be better used, and stable transition of serving the UE by the carriers may be achieved.

An embodiment of the present disclosure further provides a base station, as described in Embodiment 14 below. As principles of the base station for solving the problem are similar to that of the method of Embodiment 6, the implementation of the method of Embodiment 6 may be referred to for particular implementation of the base station, with identical contents being not going to be described herein any further.

### Embodiment 14

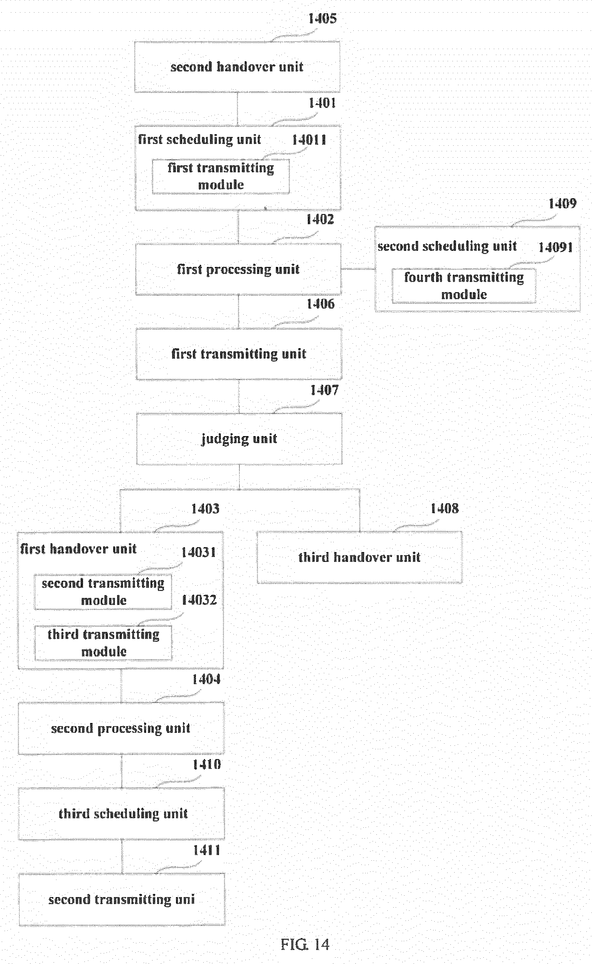

An embodiment of the present disclosure further provides a base station. FIG. 14 is a schematic diagram of a structure of the base station. Referring to FIG 14, the base station includes:
a first scheduling unit 1401 configured to terminate scheduling UE in part of subframes of current carrier;
a first processing unit 1402 configured to transform a carrier type of the part of subframes, and modify a content and/or a transmission mode of corresponding system information and a sequence and/or a transmission mode of a common signal;
a first handover unit 1403 configured to hand over UEs served by current carrier and are able to support to a transformed carrier type to the transformed carrier; and
a second processing unit 1404 configured to transform a carrier type of other subframes than the part of subframes of the current carrier into the transformed carrier.

In an implementation, the base station further includes:
a second handover unit 1405 configured to hand over UEs unable to be served to carriers able to provide services to the UE according to a carrier type of the cell to be changed before the first scheduling unit 1401 terminates scheduling UE in part of subframes of the current carrier.

In an implementation, the first scheduling unit 1401 includes:
a first transmitting module 14011 configured to transmit configuration information containing subframe pattern of the other subframes than the part of subframes to the UE, so that the UE operates in a manner of subframe pattern according to the subframe pattern.

In an implementation, the base station further includes:
a first transmitting unit 1406 configured to, before the first handover unit hands over UEs served by current carrier and are able to support to a transformed carrier type to the transformed carrier, transmit measurement configuration information to the UE of the cell, indicating the UE to measure the transformed carrier;
a judging unit 1407 configured to determine whether to hand over the UE to the transformed carrier according to a report of measurement performed by the UE on the transformed carrier; and
a third handover unit 1408 configured to hand over UE of the cell that is unable to change its serving cell from the current carrier to the transformed carrier to carriers able to provide services to the UE.

In an implementation, the first handover unit 1403 includes:
a second transmitting module 14031 configured to transmit handover assistant information to the UE, so that the UE changes its serving cell from the current carrier to the transformed carrier according to the handover assistant information.

In an implementation, the first handover unit 1403 includes:
a third transmitting module 14032 configured to transmit configuration information containing subframe pattern of subframes carrying the transformed carrier to the UE, so that the UE operates in a manner of subframe pattern according to the subframe pattern.

In an implementation, the base station further includes:
a second scheduling unit 1409 configured to schedule the UE in the part of subframes after the first processing unit 1402 transforms carrier type of the part of subframes.

In this implementation, the second scheduling unit 1409 includes:
a fourth transmitting module 14091 configured to transmit configuration information containing subframe pattern of subframes carrying the transformed carriers to the UE, so that the UE operates in a manner of subframe pattern according to the subframe pattern.

In an implementation, the base station further includes:
a third scheduling unit 1410 configured to schedule the UE in all subframes after the second processing unit 1404 transforms the carrier type of other subframes into the transformed carrier.

In this implementation, the base station further includes:
a second transmitting unit 1411 configured to transmit a notification message to UE of the cell, notifying the UE that it is possibly scheduled in any subframe.

With the base station of this embodiment, advantages of the BCT and NCT may be better used, and stable transition of serving the UE by the carriers may be achieved.

An embodiment of the present disclosure further provides a base station, as described in Embodiment 15 below. As principles of the base station for solving the problem are similar to that of the method of Embodiment 7, the implementation of the method of Embodiment 7 may be referred to for particular implementation of the base station, with identical contents being not going to be described herein any further.

### Embodiment 15

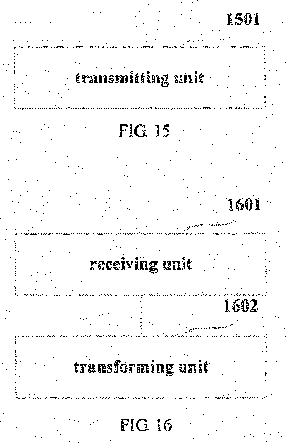

An embodiment of the present disclosure further provides a base station. FIG 15 is a schematic diagram of a structure of the base station. Referring to FIG 15, the base station includes:
a transmitting unit 1501 configured to transmit a handover command and handover assistant information to UE, so that the UE performs operations related to a carrier type designated by the base station according to the handover assistant information.

In this embodiment, the handover assistant information includes:
information related to downlink synchronization; and/or
information related to uplink random access; and/or
indication information on whether a current carrier and a transformed carrier are in the same state.

With the base station of this embodiment, handover of the UE may be sped up.

An embodiment of the present disclosure further provides UE, as described in Embodiment 16 below. As principles of the UE for solving the problem are similar to that of the method of Embodiment 8, the implementation of the method of Embodiment 8 may be referred to for particular implementation of the UE, with identical contents being not going to be described herein any further.

### Embodiment 16

An embodiment of the present disclosure further provides UE. FIG. 16 is a schematic diagram of a structure of the UE. Referring to FIG. 16, the UE includes:
a receiving unit 1601 configured to receive a handover command and handover assistant information transmitted by a base station; and
a transforming unit 1602 configured to perform operations related to a carrier type designated by the base station according to the handover assistant information.

With the UE of this embodiment, handover may be sped up.

An embodiment of the present disclosure further provides a communication system, including the base station as described in Embodiment 9 and the UE as described in Embodiment 10, or including the base station as described in embodiments 11 and 12 and the UE as described in Embodiment 13, or including the base station as described in Embodiment 14 and the UE as described in Embodiment 13, or including the base station as described in Embodiment 15 and the UE as described in Embodiment 16.

An embodiment of the present disclosure further provides a computer-readable program, wherein when the program is executed in a base station, the program enables a computer to carry out the method for transforming carrier as described in embodiments 1, 3, 4, 6 or 7 in the base station.

An embodiment of the present disclosure further provides a storage medium in which a computer-readable program is stored, wherein the computer-readable program enables a computer to carry out the method for transforming carrier as described in embodiments 1, 3, 4, 6 or 7 in a base station.

An embodiment of the present disclosure further provides a computer-readable program, wherein when the program is executed in terminal equipment, the program enables a computer to carry out the method for transforming carrier as described in embodiments 2, 5 or 8 in the terminal equipment.

An embodiment of the present disclosure further provides a storage medium in which a computer-readable program is stored, wherein the computer-readable program enables a computer to carry out the method for transforming carrier as described in embodiments 2, 5 or 8 in terminal equipment.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principles of the present disclosure, and such variants and modifications fall within the scope of the present disclosure.

## Claims

1. A method for transforming carrier, comprising:
transmitting a carrier transformation indication message by a base station of a cell to user equipment (UE) served by the cell, and indicating the UE via the carrier transformation indication message that a carrier type of the cell is to be changed; and
transforming the carrier type, and modifying a content and/or a transmission mode of corresponding system information and a sequence and/or a transmission mode of a common signal, by the base station.

2. The method according to claim 1, wherein the carrier transformation indication message comprises cell ID of the cell of which the carrier type is to be changed and/or a subframe pattern of subframes carrying a backwards compatibility carrier type (BCT) and/or a subframe pattern of subframes carrying a new carrier type (NCT).

3. The method according to claim 1, wherein if a transformed carrier is a hybrid carrier with an identical cell ID and the UE supports all carrier types in the hybrid carrier, the method further comprises:
scheduling the UE by the base station in any subframe in the hybrid carrier.

4. The method according to claim 1, wherein if a transformed carrier is a hybrid carrier with more than one cell ID and the UE supports all carrier types in the hybrid carrier, the method further comprises:
determining a serving cell of the UE, and scheduling the UE in subframes where a carrier to which the serving cell of the UE corresponds is carried, by the base station; or
scheduling the UE by the base station in subframes where carriers of different carrier types in the hybrid carrier are carried in a time-division multiplexing manner.

5. A method for transforming carrier, comprising:
determining a carrier transformation time point by user equipment (UE) after receiving a carrier transformation indication message transmitted by a base station, according to a predefined rules or time indication information carried in the carrier transformation indication message; and
performing operations related to carrier transformation by the UE at a determined carrier transformation time point.

6. The method according to claim 5, wherein the carrier transformation indication message further comprises cell ID of transformed carriers, and the step of performing operations related to carrier transformation by the UE at the determined carrier transformation time point comprises:
identifying cell system information, receiving a cell specific common signal and a downlink control signal, and updating a scrambling sequence and a reference signal sequence related to the cell ID in an uplink signal of the UE, by the UE by using the cell ID of the transformed carriers at the carrier transformation time point.

7. The method according to claim 5, wherein if a transformed carrier is a hybrid carrier with an identical cell ID and the UE supports all carrier types in the hybrid carrier, the method further comprises:
taking the hybrid carrier by the UE as its serving cell.

8. The method according to claim 5, wherein if a transformed carrier is a hybrid carrier with more than one cell ID and the UE supports all carrier types in the hybrid carrier, the method further comprises:
taking the hybrid carrier by the UE as its serving cell; or
taking one carrier in the hybrid carrier by the UE as its serving cell.

9. A method for transforming carrier, comprising:
handing over all user equipments (UEs) served by a cell to carriers capable of providing services to the UE by a base station of the cell; and
transforming a carrier type, and modifying a content and/or a transmission mode of corresponding system information and a sequence and/or a transmission mode of a common signal, by the base station.

10. The method according to claim 9, wherein if a transformed carrier is a hybrid carrier with more than one cell ID and the UE supports all carrier types in the hybrid carrier, the method further comprises:
determining a serving cell of the UE, and scheduling the UE in subframes where a carrier to which the serving cell of the UE corresponds is carried, by the base station; or
scheduling the UE by the base station in subframes where carriers of different carrier types in the hybrid carrier are carried in a time-division multiplexing manner.

11. A method for transforming carrier, comprising:
terminating scheduling user equipment (UE) in part of subframes of current carrier by a base station;
transforming a carrier type of the part of subframes, and modifying a content and/or a transmission mode of corresponding system information and a sequence and/or a transmission mode of a common signal, by the base station;
handing over UEs served by current carrier and are able to support the transformed carrier type to the transformed carrier by a base station; and
transforming a carrier type of other subframes than the part of subframes of the current carrier by the base station into the transformed carrier.

12. The method according to claim 11, wherein the step of terminating scheduling UE in part of subframes of current carrier by the base station comprises:
transmitting configuration information containing a subframe pattern of the other subframes than the part of subframes by the base station to the UE, so that the UE operates in a manner of the subframe pattern according to the subframe pattern.

13. The method according to claim 11, wherein the step of handing over UE served by current carrier and are able to support the transformed carrier type to the transformed carrier comprises:
transmitting a handover command and handover assistant information by the base station to the UE, so that the UE changes its serving cell from the current carrier to the transformed carrier according to the handover assistant information.

14. The method according to claim 11, wherein the step of handing over UE served by current carrier and are able to support the transformed carrier type to the transformed carrier comprises:
transmitting configuration information containing a subframe pattern of subframes carrying the transformed carrier by the base station to the UE, so that the UE operates in a manner of the subframe pattern according to the subframe pattern.

15. The method according to claim 11, wherein after the base station transforms the carrier type of the part of subframes, the method further comprises:
transmitting configuration information containing a subframe pattern of subframes carrying the transformed carrier by the base station to the UE, so that the UE operates in a manner of the subframe pattern according to the subframe pattern.

16. A method for transforming carrier, comprising:
transmitting a handover command and handover assistant information by a base station to user equipment (UE), so that the UE performs operations related to a carrier type designated by the base station according to the handover assistant information.

17. The method according to claim 16, wherein the handover assistant information comprises:
information related to downlink synchronization; and/or
information related to uplink random access; and/or
indication information on whether a current carrier and a transformed carrier are in the same state.

18. A method for transforming carrier, comprising:
receiving by user equipment (UE) a handover command and handover assistant information transmitted by a base station; and
performing operations related to a carrier type designated by the base station by the UE according to the handover assistant information.

19. A base station, comprising:
a transmitting unit configured to transmit a carrier transformation indication message to user equipment (UE) served by a cell corresponding to the base station, and indicate the UE via the carrier transformation indication message that a carrier type of the cell is to be changed; and
a processing unit configured to transform the carrier type, and modify a content and/or a transmission mode of corresponding system information and a sequence and/or a transmission mode of a common signal.

20. The base station according to claim 19, wherein the carrier transformation indication message comprises cell ID of the cell the carrier type of which is to be changed and/or a subframe pattern of subframes carrying a backwards compatibility carrier type (BCT) and/or a subframe pattern of subframes carrying a new carrier type (NCT).

21. The base station according to claim 19, wherein the base station further comprises:
a third scheduling unit configured to schedule the UE in any subframe in a hybrid carrier if a transformed carrier is the hybrid carrier with an identical cell ID and the UE supports all carrier types in the hybrid carrier.

22. The base station according to claim 19, wherein the base station further comprises:
a fourth scheduling unit configured to determine a serving cell of the UE, and schedule the UE in subframes where a carrier to which the serving cell of the UE corresponds is carried, or schedule the UE in subframes where carriers of different carrier types in the hybrid carrier are carried in a time-division multiplexing manner, if a transformed carrier is a hybrid carrier with more than one cell ID and the UE supports all carrier types in the hybrid carrier.

23. User equipment (UE), comprising:
a determining unit configured to determine a carrier transformation time point after receiving a carrier transformation indication message transmitted by a base station, according to a predefined rules or time indication information carried in the carrier transformation indication message; and
a handover unit configured to perform operations related to carrier transformation at a carrier transformation time point determined by the determining unit.

24. The UE according to claim 23, wherein when the carrier transformation indication message comprises cell ID of a transformed carrier, the handover unit identifies cell system information, receives a cell specific common signal and a downlink control signal and updates a scrambling sequence and a reference signal sequence related to the cell ID in an uplink signal of the UE, by using the cell ID of the transformed carrier at the carrier transformation time point.

25. The UE according to claim 23, wherein the UE further comprises:
a first selecting unit configured to take a hybrid carrier as serving cell of the UE if the transformed carrier is a hybrid carrier with an identical cell ID and the UE supports all carrier types in the hybrid carrier.

26. The UE according to claim 23, wherein the UE further comprises:
a second selecting unit configured to take the hybrid carrier as serving cell of the UE, or take one carrier in the hybrid carrier as serving cell of the UE, if the transformed carrier is the hybrid carrier with more than one cell ID and the UE supports all carrier types in the hybrid carrier.

27. A base station, comprising:
a handover unit configured to hand over all UEs which are served by a cell corresponding to the base station to carriers capable of providing services to the UEs; and
a processing unit configured to transform a carrier type, and modify a content and/or a transmission mode of corresponding system information and a sequence and/or a transmission mode of a common signal.

28. The base station according to claim 27, wherein the base station further comprises: a third scheduling unit configured to determine a serving cell of the UE, and schedule the UE in subframes where a carrier to which the serving cell of the UE corresponds is carried, or schedule the UE in subframes where carriers of different carrier types in a hybrid carrier are carried in a time-division multiplexing manner, if a transformed carrier is a hybrid carrier with more than one cell ID and the UE supports all carrier types in the hybrid carrier.

29. A base station, comprising:
a first scheduling unit configured to terminate scheduling user equipment (UE) in part of subframes of current carrier;
a first processing unit configured to transform a carrier type of the part of subframes, and modify a content and/or a transmission mode of corresponding system information and a sequence and/or a transmission mode of a common signal;
a first handover unit configured to hand over UEs served by current carrier and are able to support to a transformed carrier type to the transformed carrier; and
a second processing unit configured to transform a carrier type of other subframes than the part of subframes of the current carrier into the transformed carrier.

30. The base station according to claim 29, wherein the first scheduling unit comprises:
a first transmitting module configured to transmit configuration information containing a subframe pattern of the other subframes than the part of subframes to the UE, so that the UE operates in a manner of the subframe pattern according to the subframe pattern.

31. The base station according to claim 29, wherein the first handover unit comprises:
a second transmitting module configured to transmit a handover command and handover assistant information to the UE, so that the UE changes its serving cell from the current carrier to the transformed carrier according to the handover assistant information.

32. The base station according to claim 29, wherein the first handover unit comprises:
a third transmitting module configured to transmit configuration information containing a subframe pattern of subframes carrying the transformed carrier to the UE, so that the UE operates in a manner of the subframe pattern according to the subframe pattern.

33. The base station according to claim 29, wherein the base station further comprises:
a fourth transmitting module configured to transmit configuration information containing a subframe pattern of subframes carrying the transformed carriers to the UE after the first processing unit transforms the carrier type of the part of subframes, so that the UE operates in a manner of the subframe pattern according to the subframe pattern.

34. A base station, comprising:
a transmitting unit configured to transmit a handover command and handover assistant information to UE, so that the UE performs operations related to a carrier type designated by the base station according to the handover assistant information.

35. The base station according to claim 34, wherein the handover assistant information comprises:
information related to downlink synchronization; and/or
information related to uplink random access; and/or
indication information on whether a current carrier and a transformed carrier are in the same state.

36. UE, comprising:
a receiving unit configured to receive a handover command and handover assistant information transmitted by a base station; and
a transforming unit configured to perform operations related to a carrier type designated by the base station according to the handover assistant information.

37. A communication system, comprising the base station as claimed in any one of claims 19-22 and the UE as claimed in any one of claims 23-26, or comprising the base station as claimed in either one of claims 27-28 and UE, or comprising the base station as claimed in any one of claims 29-33 and UE, or comprising the base station as claimed in either one of claims 34-35 and the UE as claimed in claim 36.

38. A computer-readable program, wherein when the program is executed in a base station, the program enables a computer to carry out the method for transforming carrier as claimed in any one of claims 1-4, 9-10, 11-15 and 16-17 in the base station.

39. A storage medium in which a computer-readable program is stored, wherein the computer-readable program enables a computer to carry out the method for transforming carrier as claimed in any one of claims 1-4, 9-10, 11-15 and 16-17 in a base station.

40. A computer-readable program, wherein when the program is executed in terminal equipment, the program enables a computer to carry out the method for transforming carrier as claimed in any one of claims 5-8 and 18 in the terminal equipment.

41. A storage medium in which a computer-readable program is stored, wherein the computer-readable program enables a computer to carry out the method for transforming carrier as claimed in any one of claims 5-8 and 18 in terminal equipment.
